# EUROPÄISCHE PATENTSCHRIFT

(11) **EP 2 913 562 B1**
(45) Veröffentlichungstag und Bekanntmachung des Hinweises auf die Patenterteilung: **12.04.2017**
(21) Anmeldenummer: 15000168.3
(22) Anmeldetag: 21.01.2015
(51) Int. Cl.: F16H 59/02, H01H 21/36, B60K 20/06

(54) **Lenkradschaltvorrichtung zur Auslösung von Schaltvorgängen in einem Fahrzeug**
Steering wheel shift device for triggering shifting operations in a vehicle
Dispositif de changement de vitesse placé au volant de direction d'un véhicule

(30) Priorität: 24.02.2014 DE 102014002398
(43) Veröffentlichungstag der Anmeldung: 02.09.2015
(73) Patentinhaber: paragon AG, 33129 Delbrück (DE)
(72) Erfinder: Plettrichs, Ulf, 91301 Forchheim (DE); Ruegenberg, Roland, 55566 Bad Sobernheim (DE)
(74) Vertreter: Lelgemann, Karl-Heinz

(56) Entgegenhaltungen:
- WO-A1-03/019048
- WO-A1-2012/010226
- DE-A1-102012 014 019
- US-B1- 6 979 788

## Beschreibung

Die Erfindung bezieht sich auf eine Lenkradschaltvorrichtung zur Auslösung von Schaltvorgängen in einem Fahrzeug nach dem Oberbegriff des Patentanspruchs 1.

Aus dem Stand der Technik sind derartige Lenkradschaltvorrichtungen bekannt, die üblicherweise als Lenkradschaltwippen ausgestaltet sind und auf der Grundlage von Mikroschaltern oder Schaltmatten funktionieren. Derartige Lenkradschaltvorrichtungen weisen insoweit Probleme auf, als die in Verbindung mit ihnen realisierbaren Schaltwege, d.h. die Signaldurchschaltungen, begrenzt sind.

Die DE 10 2012 014 019 A zeigt eine Lenkradschaltvorrichtung, die der Auslösung von Schaltvorgängen in einem Kraftfahrzeug dient. Zu dieser bekannten Lenkradschaltvorrichtung gehört ein elektrisches Schaltelement bzw. ein lenkradfestes Kontaktteil, das mit einem beweglichen Kontaktteil zusammenwirkt. Hierzu ist das bewegliche Kontaktteil zwischen seiner zum lenkradfesten Kontaktteil beabstandeten Ruhestellung und seiner gegen das lenkradfeste Kontaktteil anliegenden Schaltstellung verstellbar. Zur Durchführung der Verstellbewegung des beweglichen Kontaktteils wird ein Schalthebel bzw. Schaltpaddle betätigt. Mittels dem Schaltpaddle ist das bewegliche Kontaktteil aus der vorstehend erwähnten Ruhe- in die vorstehend ebenfalls erwähnte Schaltstellung verstellbar. Das bewegliche Kontaktteil ist an einer Schaltwippe angeordnet, wobei die Schaltwippe mittels des Schalthebels bzw. Schaltpaddles aus ihrer Ausgangsstellung, in der sie mit dem beweglichen Kontaktteil ihre Ruhestellung einnimmt, in ihre Betriebsstellung verstellbar ist, in der das bewegliche Kontaktteil seine Schaltstellung einnimmt.

Ausgehend von dem vorstehend geschilderten Stand der Technik liegt der Erfindung die Aufgabe zugrunde, eine Lenkradschaltvorrichtung zur Auslösung von Schaltvorgängen in einem Fahrzeug zur Verfügung zu stellen, bei der ein dauerhaft zuverlässiger und sicherer Betrieb gewährleistet ist und die mechanische Belastung der Kontaktteile weitestgehend unabhängig von der Kraft ist, mit der die Lenkradschaltvorrichtung betätigt wird.

Diese Aufgabe wird erfindungsgemäß durch die Merkmale im kennzeichnenden Teil des Hauptanspruchs gelöst. Durch die Ausgestaltung des beweglichen Kontaktteils als Kontaktfeder ist sichergestellt, dass bei der Betätigung der Lenkradschaltvorrichtung ausgeübte Kraft aufteilbar ist, und zwar in einen Kraftanteil, der der Herstellung und Aufrechterhaltung des Kontakts zwischen den Kontaktteilen dient, und einen Kraftanteil, der durch die Verformung der Kontaktfeder abpufferbar ist.

Die vorrichtungsinternen Schaltwege sind erheblich reduziert, ohne dass die Betriebssicherheit der Lenkradschaltvorrichtung in irgendeiner Form beeinträchtigt würde, z.B. von ca. 2 mm auf 0,6 mm. Der eigentliche vorrichtungsinterne Schaltweg wird mittels der Schaltwippe auf das eigentliche Schaltpaddle bzw. dessen Betätigungsweg übersetzt.

Hierdurch können für das Schaltpaddle sehr variable Schaltwege gestaltet werden.

Wenn die Lenkradschaltvorrichtung ein Gehäuse aufweist, in dem die Schaltwippe um eine Schaltwippenachse und das Schaltpaddle um eine zur Schaltwippenachse beabstandete und parallele Schaltpaddleachse schwenkbar gelagert ist, ist es mit einem vergleichsweise geringen technisch-konstruktiven Aufwand möglich, eine große Bandbreite des Verhältnisses zwischen dem vorrichtungsinternen Schaltweg und dem Betätigungsweg des Schaltpaddle zu schaffen. Darüber hinaus können hierdurch kompakte Ausgestaltungen der erfindungsgemäßen Lenkradschaltvorrichtung realisiert werden.

Vorteilhaft ist das gehäuse- und lenkradfeste Kontaktteil zwischen der Schaltwippenachse und der Schaltpaddleachse angeordnet, wodurch die Kompaktheit der erfindungsgemäßen Lenkradschaltvorrichtung weiter gefördert wird. Bei dieser Ausgestaltung kann dann das Schaltpaddle im Uhrzeiger- oder Gegenuhrzeigersinn um seine Schaltpaddleachse und die Schaltwippe im Gegenuhrzeiger- bzw. im Uhrzeigersinn um ihre Schaltwippenachse verschwenkt werden, um die Schaltwippe in deren Betriebsstellung zu bringen.

Um eine sichere Rückstellung der Schaltwippe in deren Ausgangsstellung sicherzustellen ist es vorteilhaft, wenn die erfindungsgemäße Lenkradschaltvorrichtung gemäß einer Weiterbildung eine Druckfeder aufweist, die zwischen dem Gehäuse und der Schaltwippe angeordnet und mittels der die Schaltwippe in Richtung auf ihre Ausgangsstellung vorgespannt ist.

Darüber hinaus können Beschädigungen der erfindungsgemäßen Lenkradschaltvorrichtung besser verhindert werden, wenn die Lenkradschaltvorrichtung einen Gummipuffer aufweist, der zwischen der Schaltwippe und dem Gehäuse angeordnet und mittels dem eine Verstellung der Schaltwippe über deren Betriebsstellung hinaus begrenzbar ist.

Um für die Bewegung der Schaltwippe und damit die Betätigung des Schaltpaddle einen vorgegebenen Kraft-Weg-Verlauf realisieren zu können, ist es vorteilhaft, wenn die Schaltwippe eine Federhülse aufweist, die mit ihrem freien Ende aus der Schaltwippe vorsteht und in Anlage an einer Schaltkulisse ist, mittels der sie bei der Bewegung der Schaltwippe aus deren Ausgangs- in deren Betriebsstellung zusammendrückbar ist. Durch die Bewegung des freien Endes der Federhülse entlang der Kulissenbahn der Schaltkulisse kann der Kraft-Weg-Verlauf so eingestellt werden, dass ein Kraftanstieg auf sehr kurzem Weg stattfindet, der dann ebenso auf sehr kurzem Weg abrupt zusammenbricht, z.B. auf ca. 30 bis 50 % der Maximalkraft. Für den Fall, dass die Betätigungskraft auf dem Schaltpaddle vergleichsweise gering ist und dadurch auf die Federhülse eine resultierende kleine Kraft einwirkt, um die Schaltwippe in ihre Ausgangsstellung zurückzustellen, kann mittels der vorstehend bereits erwähnten Druckfeder eine Rückstellung der Schaltwippe und damit des Schaltpaddle in die Ausgangsstellung bewirkt werden.

Die Einstellung des Kraft-Weg-Verlaufs sowie der elektrische Schaltpunkt können durch die Geometrie der Schaltkulisse sowie das Übersetzungsverhältnis zwischen der Schwenkbewegung des Schaltpaddle und der Schwenkbewegung der Schaltwippe mehr oder weniger beliebig gestaltet werden.

Im Folgenden wird die Erfindung anhand einer Ausführungsform unter Bezugnahme auf die Zeichnung näher erläutert.

Es zeigen:
- Figur 1: eine Oberansicht einer Ausführungsform einer erfindungsgemäßen Lenkradschaltvorrichtung zur Auslösung von Schaltvorgängen in einem Fahrzeug;
- Figur 2: den Schnitt A - A in Figur 1;
- Figur 3: den Schnitt B - B in Figur 1;
- Figur 4: eine Draufsicht auf die in Figur 1 gezeigte Ausführungsform der erfindungsgemäßen Lenkradschaltvorrichtung bei oben geöffnetem Gehäuse und ohne Schaltpaddle; und
- Figur 5: eine perspektivische Darstellung der in den Figuren 1 bis 4 gezeigten Ausführungsformen der erfindungsgemäßen Lenkradschaltvorrichtung, ebenfalls ohne obere Abdeckung des Gehäuses und ohne Schaltpaddle.

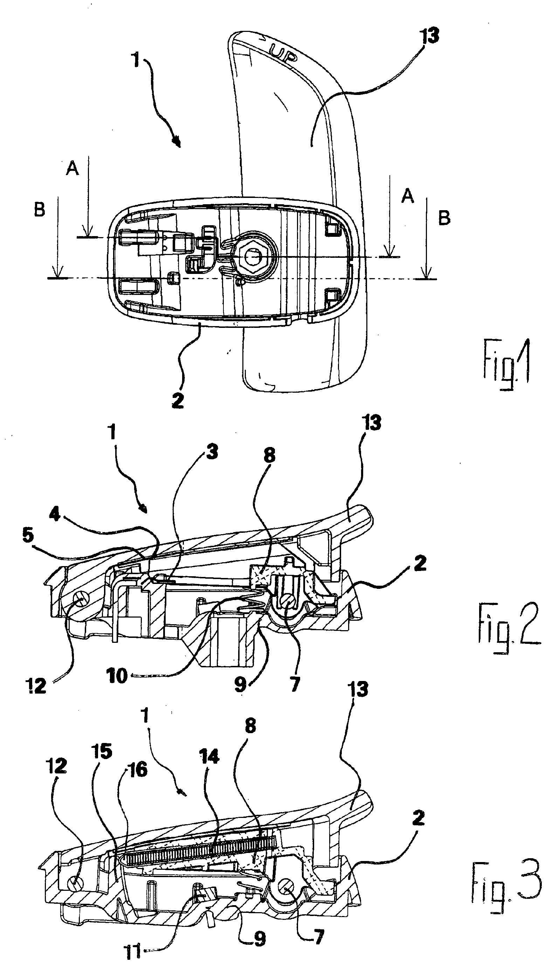

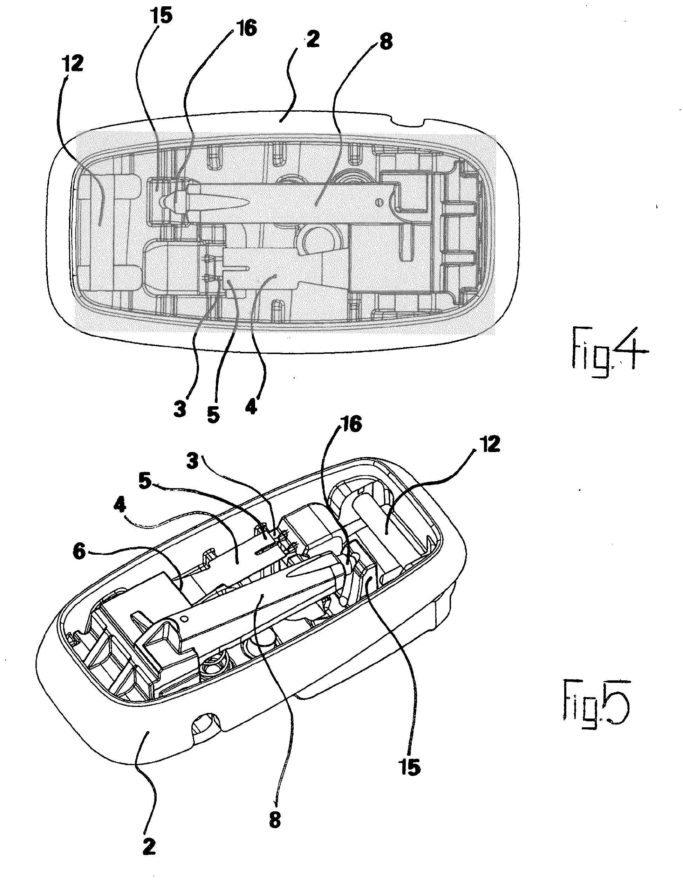

Eine im Folgenden anhand der Figuren 1 bis 5 näher erläuterte Ausführungsform einer erfindungsgemäßen Lenkradschaltvorrichtung 1 dient dazu, Schaltvorgänge in einem Fahrzeug auszulösen, wobei die Auslösung bequem vom Fahrer möglich sein soll, ohne dass die Möglichkeiten des Fahrzeugführers, seine Aufmerksamkeit dem Betrieb des Fahrzeugs und dem Verkehr zu widmen, beeinträchtigt werden.

Von daher ist die Lenkradschaltvorrichtung 1 am in den Figuren nicht gezeigten Lenkrad des Fahrzeugs angeordnet.

Zu der Lenkradschaltvorrichtung 1 gehört ein Gehäuse 2, das in geeigneter Weise am Lenkrad des Fahrzeugs angebracht ist.

Innerhalb des Gehäuses 2 der Lenkradschaltvorrichtung 1 ist ein lenkradfestes Kontaktteil einer neben dem lenkradfeste Kontaktteil noch ein in Bezug auf die Lenkrad bewegliches Kontaktteil 4 aufweisenden Auslöseverbindung 3, 4 angeordnet. Das in Bezug auf das Lenkrad bzw. in Bezug auf das Gehäuse 2 bewegliche Kontaktteil 4 ist in Form einer Kontaktfeder 4 ausgebildet. Die Kontaktfeder 4 hat einen Kontaktabschnitt 5, mit dem sie in Anlage an das lenkradfeste Kontaktteil 3 bringbar ist, und einen Befestigungsabschnitt 6, an dem sie an einer innerhalb des Gehäuses 2 um eine Schaltwippenachse 7 schwenkbar gelagerte Schaltwippe 8 befestigt ist. Hierzu ist der Befestigungsabschnitt 6 der Kontaktfeder 4 im dargestellten Ausführungsbeispiel vom Werkstoff der Schaltwippe 8 umspritzt.

Die Schaltwippe 8 mit der an ihr angebrachten Kontaktfeder 4 ist innerhalb des Gehäuses 2 aus einer Ausgangsstellung, in der der Kontaktabschnitt 5 der Kontaktfeder 4 einen Abstand zum lenkradfesten Kontaktteil 3 hat, in eine Betriebsstellung verstellbar, in der der Kontaktabschnitt 5 der Kontaktfeder 4 sich in Anlage am lenkradfesten Kontaktteil 3 befindet und somit die Auslöseverbindung 3, 4 schließt und einen Schaltvorgang auslöst.

Zwischen einer in den Figuren unteren Wandung 9 des Gehäuses 2 und der Unterseite der Schaltwippe 8 ist mit einem vergleichsweise geringen Abstand zur Schaltwippenachse 7 eine Druckfeder 10 angeordnet, mittels der die Schaltwippe 8 in Richtung auf ihre Ausgangsstellung, in der zwischen dem Kontaktabschnitt 5 der Kontaktfeder 4 und dem lenkradfesten Kontaktteil 3 ein Abstand vorliegt, vorgespannt.

Darüber hinaus ist auf der Innenseite der unteren Wandung 9 ein Gummipuffer 11 vorgesehen, mittels dem die Bewegung der Schaltwippe 8 über ihre Betriebsstellung hinaus begrenzt wird.

Bei der Bewegung der Schaltwippe 8 aus deren Ausgangs- in deren Betriebsstellung gerät die Kontaktfeder 4 aus einer Ruhestellung, in der zwischen dem Kontaktabschnitt 5 einerseits und dem lenkradfesten Kontaktteil 3 andererseits ein Abstand vorliegt, in ihre Schaltstellung, in der der Kontaktabschnitt 5 der Kontaktfeder 4 in Anlage am lenkradfesten Kontaktteil 3 ist.

Bei der in den Figuren 1 bis 5 gezeigten Ausführungsform der erfindungsgemäßen Lenkradschaltvorrichtung 1 ist in einem Abschnitt des Gehäuses 2, der dem die Schaltwippenachse 7 aufnehmenden Abschnitt etwa gegenüberliegt, eine Schaltpaddleachse 12 gehaltert, um die ein Schaltpaddle 13 schwenkbar ist. Die Schwenkung des Schaltpaddle 13 wird manuell durchgeführt. Zwischen der Schaltwippenachse 7 und der Schaltpaddleachse 12, die zueinander parallel verlaufen, ist ein Zwischenraum vorgesehen. In diesem Zwischenraum befinden sich das lenkradfeste Kontaktteil und ein wesentlicher Abschnitt der Schaltwippe 8 mit dem Kontaktabschnitt 5 der Kontaktfeder 4.

Wenn im dargestellten Ausführungsbeispiel das Schaltpaddle 13 manuell im Uhrzeigersinn um die Schaltpaddleachse 12 geschwenkt wird, wird die Schaltwippe 8 aufgrund der Anlage zwischen der Unterseite des Schaltpaddle 13 und der Oberseite der Schaltwippe 8 im Gegenuhrzeigersinn um die Schaltwippenachse 7 geschwenkt. Bei dieser Schwenkbewegung im Gegenuhrzeigersinn gerät die Schaltwippe 8 aus ihrer Ausgangsstellung in ihre Betriebsstellung und entsprechend die Kontaktfeder 4 aus ihrer Ruhe- in ihre Schaltstellung, in der der Kontaktabschnitt 5 der Kontaktfeder 4 in Anlage am lenkradfesten Kontaktteil 3 ist.

Wird das Schaltpaddle 13 losgelassen, wird die Schaltwippe 8 mittels der zwischen ihrer Unterseite und der Oberseite der unteren Wandung 9 angeordneten Druckfeder 10 zurück in ihre Ausgangsstellung verbracht.

Aufgrund der quasi frei gestaltbaren Hebelverhältnisse zwischen dem Schaltpaddle 13 und der Schaltpaddleachse 12 sowie der Schaltwippe 8 und der Schaltwippenachse 7 sowie der an der Schaltwippe 8 beliebig wählbaren Anordnung der Kontaktfeder 4 kann der in der Ausgangsstellung der Schaltwippe 8 vorliegende Abstand zwischen dem Kontaktabschnitt der Kontaktfeder 4 einerseits und dem lenkradfesten Kontaktteil 3 sehr klein sein, z.B. in der Größenordnung von 0,6 mm liegen, ohne dass ein sicheres Funktionieren und eine hohe Betriebssicherheit der erfindungsgemäßen Lenkradschaltvorrichtung beeinträchtigt würde. Nichtsdestotrotz kann die Schwenkbewegung des Schaltpaddle im Vergleich zum Abstand zwischen Kontaktabschnitt 5 der Kontaktfeder 4 und lenkradfestem Kontaktteil groß sein.

Um bei der Schwenkbewegung des Schaltpaddle 13 um die Schaltpaddleachse 12, mit der die Schaltwippe 8 aus deren Ausgangsin deren Betriebsstellung verbracht wird, einen spürbaren Kraft-/Weg-Verlauf zu erzeugen, ist im dargestellten Ausführungsbeispiel in der Schaltwippe 8 eine Federhülse 14 angeordnet. Die Federhülse 14 wirkt mit einer im Gehäuse 2 fest angeordneten Schaltkulisse 15 zusammen. Hierzu steht die Federhülse 14 mit ihrem nicht in der Schaltwippe 8 aufgenommenen freien Ende 16 aus der Schaltwippe 8 vor und liegt mit diesem freien Ende 16 gegen die Schaltkulisse 15 an. Beim Schwenken des Schaltpaddle 13 bzw. der Schaltwippe 8 aus deren Ausgangs- in deren Betriebsstellung muss die Federhülse 14 mit zunehmendem Weg weiter zusammengedrückt werden. Entsprechend lassen sich die Federhülse 14 und die Schaltkulisse 15 so ausgestalten bzw. anordnen, dass quasi beliebige Kraft-Weg-Verläufe für die Schwenkbewegung des Schaltpaddle 13 bzw. der Schaltwippe 8 geschaffen werden können.

## Patentansprüche

1. Lenkradschaltvorrichtung zur Auslösung von Schaltvorgängen in einem Fahrzeug, mit einem lenkradfesten Kontaktteil (3), einem beweglichen Kontaktteil (4), das zwischen seiner zum lenkradfesten Kontaktteil (3) beabstandeten Ruhestellung und seiner gegen das lenkradfeste Kontaktteil (3) anliegenden Schaltstellung verstellbar ist, einem Schaltpaddle (13), mittels dem das bewegliche Kontaktteil (3) aus seiner Ruhe- in seine Schaltstellung verstellbar ist, und einer Schaltwippe (8), an der das bewegliche Kontaktteil (4) angeordnet und die durch das Schaltpaddle (13) aus ihrer Ausgangsstellung, in der das bewegliche Kontaktteil (4) seine Ruhestellung einnimmt, in ihre Betriebsstellung verstellbar ist, in der das bewegliche Kontaktteil (4) seine Schaltstellung einnimmt, **dadurch gekennzeichnet, dass** das an der Schaltwippe (8) angeordnete bewegliche Kontaktteil (4) als Kontaktfeder (4) ausgebildet ist, die einen mit dem lenkradfesten Kontaktteil (3) in Anlage bringbaren Kontaktabschnitt (5) und einen mit der Schaltwippe (8) verbundenen, vorzugsweise vom Werkstoff der Schaltwippe (8) umspritzten Befestigungsabschnitt (6) aufweist.

2. Lenkradschaltvorrichtung nach Anspruch 1, mit einem Gehäuse (2), in dem die Schaltwippe (8) um eine Schaltwippenachse (7) und das Schaltpaddle (13) um eine zur Schaltwippenachse (7) beabstandete und parallele Schaltpaddleachse (12) schwenkbar gelagert ist.

3. Lenkradschaltvorrichtung nach Anspruch 2, bei der das gehäuse- und lenkradfeste Kontaktteil (3) zwischen der Schaltwippen- (7) und der Schaltpaddleachse (12) angeordnet ist.

4. Lenkradschaltvorrichtung nach Anspruch 2 oder 3, mit einer Druckfeder (10), die zwischen dem Gehäuse (2) und der Schaltwippe (8) angeordnet und mittels der die Schaltwippe (8) in Richtung auf ihre Ausgangsstellung vorgespannt ist.

5. Lenkradschaltvorrichtung nach einem der Ansprüche 2 bis 4, mit einem Gummipuffer (11), der zwischen der Schaltwippe (8) und dem Gehäuse (2) angeordnet und mittels dem eine Verstellung der Schaltwippe (8) über deren Betriebsstellung hinaus begrenzbar ist.

6. Lenkradschaltvorrichtung nach einem der Ansprüche 1 bis 5, deren Schaltwippe (8) eine Federhülse (14) aufweist, die mit ihrem freien Ende (16) aus der Schaltwippe (8) vorsteht und in Anlage an einer Schaltkulisse (15) ist, mittels der sie bei der Bewegung der Schaltwippe (8) aus deren Ausgangs- in deren Betriebsstellung zusammendrückbar ist.

## Claims

1. A steering wheel shift device for triggering shift actions in a vehicle, having a steering wheel-fixed contact part (3), a movable contact part (4) which is adjustable between its idle position spaced apart from the steering wheel-fixed contact part (3) and its shift position bearing against the steering wheel-fixed contact part (3), a shift paddle (13), by means of which the moving contact part (3) can be adjusted from its idle position into its shift positon, and a shift rocker (8), on which the moving contact part (4) is arranged and which can be adjusted by the shift paddle (13) from its starting position, in which the moving contact part (4) adopts its idle position, into its operating position, in which the moving contact part (4) adopts its shift position,
**characterized in that** the moving contact part (4) arranged on the shift rocker (8) is configured as a contact spring (4) which has a contact portion (5) that can be brought to bear against the steering wheel-fixed contact part (3) and a fastening portion (6) connected to the shift rocker (8), preferably coated with the material of the shift rocker (8).

2. The steering wheel shift device according to claim 1, having a housing (2) in which the shift rocker (8) is pivotably mounted about a shift rocker axis (7) and the shift paddle (13) about a shift paddle axis (12) spaced apart and parallel to the shift rocker axis (7).

3. The steering wheel shift device according to claim 2, in which the housing-fixed and steering wheel-fixed contact part (3) is arranged between the shift rocker axis (7) and the shift paddle axis (12).

4. The steering wheel shift device according to claim 2 or 3, having a compression spring (10) which is arranged between the housing (2) and the shift rocker (8) and by means of which the shift rocker (8) is pretensioned in the direction of its starting position.

5. The steering wheel shift device according to one of claims 2 to 4, having a rubber buffer (11) which is arranged between the shift rocker (8) and the housing (2) and by means of which an adjustment of the shift rocker (8) beyond the operating position thereof can be limited.

6. The steering wheel shift device according to one of claims 1 to 5, the shift rocker (8) of which has a spring sleeve (14) which projects with its free end (16) from the shift rocker (8) and bears against a shift rocker (15), by means of which it can be compressed during the movement of the shift rocker (8) from the starting position thereof into the operating position thereof.

## Revendications

1. Dispositif de commande de vitesse au volant pour déclencher des changements de vitesse dans un véhicule, avec une partie de contact solidaire du volant (3), une partie de contact mobile (4) pouvant être déplacée entre sa position de repos espacée par rapport à la partie de contact solidaire du volant (3) et sa position de changement de vitesse en appui contre la partie de contact solidaire du volant (3), une palette de commande de vitesse (13) au moyen de laquelle la partie de contact mobile (3) peut être déplacée de sa position de repos vers sa position de changement de vitesse, et une bascule de commande de vitesse (8) sur laquelle la partie de contact mobile (4) est disposée et qui peut être déplacée par la palette de commande de vitesse (13) de sa position initiale dans laquelle la partie de contact mobile (4) adopte sa position de repos vers sa position de fonctionnement dans laquelle la partie de contact mobile (4) adopte sa position de changement de vitesse,
**caractérisé en ce que** la partie de contact mobile (4) disposée sur la bascule de commande de vitesse (8) est réalisée en tant que ressort de contact (4) qui présente un segment de contact (5) pouvant être mis en appui contre la partie de contact solidaire du volant (3) et un segment de fixation (6) relié à la bascule de commande de vitesse (8), de préférence surmoulé par le matériau de la bascule de commande de vitesse (8).

2. Dispositif de commande de vitesse au volant selon la revendication 1, avec un boîtier (2) dans lequel la bascule de commande de vitesse (8) est montée de manière pivotante autour d'un axe de bascule de commande de vitesse (7), et la palette de commande de vitesse (13) étant montée de manière pivotante autour d'un axe de palette de commande de vitesse (12) espacé par rapport à l'axe de bascule de commande de vitesse (7) et parallèle à celui-ci.

3. Dispositif de commande de vitesse au volant selon la revendication 2, dans lequel la partie de contact solidaire du boîtier et du volant (3) est disposée entre l'axe de la bascule de commande de vitesse (7) et l'axe de la palette de commande de vitesse (12).

4. Dispositif de commande de vitesse au volant selon la revendication 2 ou 3, avec un ressort de pression (10) disposé entre le boîtier (2) et la bascule de commande de vitesse (8) et précontraint en direction de sa position initiale au moyen de la bascule de commande de vitesse (8).

5. Dispositif de commande de vitesse au volant selon l'une des revendications 2 à 4, avec un tampon en caoutchouc (11) disposé entre la bascule de commande de vitesse (8) et le boîtier (2) et au moyen duquel un déplacement de la bascule de commande de vitesse (8) au-delà de la position de fonctionnement de celle-ci peut être limité.

6. Dispositif de commande de vitesse au volant selon l'une des revendications 1 à 5, dont la bascule de commande de vitesse (8) présente une douille élastique (14) qui dépasse avec son extrémité libre (16) à partir de la bascule de commande de vitesse (8) et est en appui contre une coulisse de commande de vitesse (15) au moyen de laquelle elle peut être comprimée lors du déplacement de la bascule de commande de vitesse (8) de la position initiale de celle-ci vers la position de fonctionnement de celle-ci.
